(19) Europäisches Patentamt
European Patent Office
Office européen des brevets

(11) **EP 2 317 148 A1**

(12) **EUROPEAN PATENT APPLICATION**
published in accordance with Art. 153(4) EPC

(43) Date of publication:
**04.05.2011 Bulletin 2011/18**

(51) Int Cl.:
*F04D 19/04* (2006.01)   *G01K 3/14* (2006.01)

(21) Application number: **09808243.1**

(22) Date of filing: **17.08.2009**

(86) International application number:
**PCT/JP2009/064393**

(87) International publication number:
**WO 2010/021307 (25.02.2010 Gazette 2010/08)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **19.08.2008 JP 2008211017**

(71) Applicant: **Edwards Japan Limited Yachiyo-shi Chiba 276-8523 (JP)**

(72) Inventors:
• **NONAKA, Manabu Yachiyo-shi Chiba 276-8523 (JP)**
• **SAKAGUCHI, Yoshiyuki Yachiyo-shi Chiba 276-8523 (JP)**

(74) Representative: **Clark, Charles Robert Edwards Limited Intellectual Property Manor Royal Crawley West Sussex RH10 9LW (GB)**

(54) **VACUUM PUMP**

(57)     In a vacuum pump, the temperature of a rotor portion is detected more accurately in accordance with a simple method.

A thermistor 51 is disposed on a stator in a state where a sensor unit fixed to a frame 53 by a thin film such as a polyimide film opposes a rotor section that is a target of temperature detection. Further, assuming the non-negligible influence, in terms of measurement, that is exerted by heat from the frame, stator and so forth on the first temperature sensor (heat flow from/to the frame), the rotor temperature is estimated more accurately by detecting that influence via other sensors, to compensate for the drop or rise in temperature in the first temperature sensor, and estimate thereby more accurately the temperature of the rotor. Specifically, a second temperature sensor, or a second temperature sensor and a third temperature sensor, are disposed for the first temperature sensor, and the temperature of the rotor section is estimated on the basis of a first detection value by the first temperature sensor, and a second detection value (and a third detection value) by the second temperature sensor (and the third temperature sensor).

Fig.2

REQUIRED TEMPERATURE (THE TEMPERATURE OF THERMISTOR THERMALLY INSULATED IN IDEAL CONDITIONS)

ESTIMATING THE VALUE OF T0-T1 ON THE BASIS OF THE VALUE T2-T1

THE FIRST SENSOR UNIT

THE SECOND SENSOR UNIT

$T0 = T1 + \zeta(T2-T1)$
$\zeta$: EXPERIMENTAL VALUE

Q(HEAT OUTFLOW VIA THE SUPPORT FILM)

Printed by Jouve, 75001 PARIS (FR)

EP 2 317 148 A1

**Description**

The present invention relates to a vacuum pump such as a turbo-molecular pump that evacuates a vacuum vessel.

In vacuum pumps such as turbo-molecular pumps, a rotor portion (rotary portion) in which rotating blades rotate at high speed is often brought to a temperature in excess of 100 degrees, namely about 150 degrees, as a result of the evacuation of the process gas. Durability of the rotor becomes an issue, due to the phenomenon of creep, if the rotor section goes on rotating at high speed while in a high-temperature state. It is necessary therefore to measure the temperature of the rotor section. Since the rotor is rotating at high speed, the temperature must be measured using not a contact-type sensor, but a contact-less temperature sensor. Known methods for contact-less measurement of rotor temperature include, for instance, measurement methods that utilize infrared temperature sensors, such as thermopiles and pyroelectric sensors, and methods such as the one disclosed in Japanese Patent Application Laid-open No. H11-37087. The method disclosed therein involves providing a radiant-heat generating surface on a rotor, providing a radiant-heat absorbing surface on an opposite face thereto, and measuring the temperature of rotating blades by measuring the temperature of the radiant-heat absorbing surface.

When using an infrared temperature sensor disposed adjacent to rotating blades, however, the temperature characteristic of the sensor varies in response to changes of the temperature of the sensor itself, and the output values of the sensor fluctuate. As a result, accurate measurements are difficult to achieve, which is problematic. The influence of temperature can be reduced by arranging the infrared sensor away from the measurement target. However, this is problematic in that doing so requires an optical system for preventing incidence of infrared rays other than those from the object whose temperature is to be measured (rotor), and requires an optical fiber for guiding the infrared rays up to the sensor, all of which drives costs up. In a case where there is provided the radiant-heat generating surface disclosed in document Japanese Patent Application Laid-open No. H11-37087, the temperature of the radiant-heat absorbing surface drops below the rotating blade temperature due to heat conduction between the radiant-heat absorbing surface and a support that supports the radiant-heat absorbing surface. Measurement precision is impaired thereby, which is problematic.

Accordingly, it is an object of the present invention to enable more accurate detection of the temperature of a rotor portion in a vacuum pump, in accordance with a simple method.

(1) In order to attain the above object, the invention set forth in claim 1 provides a vacuum pump that has: a casing provided with a inlet port and an outlet port; a stator portion provided inside the casing; a shaft rotatably supported inside the casing; and a rotor disposed on the shaft and provided with a gas transfer mechanism that transfers a gas from the inlet port to the outlet port, the vacuum pump further having:

the rotor portion arranged with a predetermined clearance between the stator portion and the rotor portion; a motor that rotates the shaft; temperature detection means having at least two contact-less temperature sensors, one of which is disposed opposing the rotor; and temperature estimation means for estimating a temperature of the rotor on the basis of an output value from each of the temperature sensors of the temperature detection means.

(2) The invention set forth in claim 2 provides the vacuum pump according to claim 1, wherein the temperature detection means is formed of a first sensor unit and a second sensor unit each having a frame body, a fixing member disposed on one face of the frame body, and a temperature sensor fixed to the fixing member, and a heat conduction amount of at least one of the fixing member and the frame body differs between the first sensor unit and the second sensor unit.

(3) The invention set forth in claim 3 provides the vacuum pump according to claim 1, wherein the temperature detection means is formed of a sensor unit that has a frame body, a fixing member disposed on one face of the frame body, a first temperature sensor fixed to the fixing member, and at least one of a second temperature sensor fixed to the frame body and a third temperature sensor fixed to the stator portion.

(4) The invention set forth in claim 4 provides the vacuum pump according to any one of claims 1 to 3, wherein the temperature detection means is disposed at the stator portion, opposing the rotor, adjacent to the outlet port.

(5) The invention set forth in claim 5 provides the vacuum pump according to any one of claims 1 to 3, wherein the temperature detection means is disposed at the stator portion, opposing the rotor, in a flow path of a purge gas that flows out of the outlet port, the flow path being an inner space of the rotor.

(6) The invention set forth in claim 6 provides the vacuum pump according to claim 1, wherein the temperature detection means has a support portion having thermal resistance; and the at least two contact-less temperature sensors are supported by the support portion and are disposed at the stator portion opposing the rotor.

(7) The invention set forth in claim 7 provides the vacuum pump according to claim 1, wherein the temperature detection means has a support portion having thermal resistance, and one temperature sensor disposed opposing the rotor, from among the at least two contact-less temperature sensors, is supported by the support portion and is disposed at the stator portion opposing the rotor.

In the present invention, the temperature of the rotor is estimated on the basis of the output values of temperature sensors by a temperature detection means that has at least two contact-less temperature sensors one of which is disposed opposing the rotor. The temperature of the rotor can be detected as a result more accurately in accordance with a simple method.

Fig. 1 is a schematic diagram of a sensor unit in a first embodiment of the present invention;
Fig. 2 is an explanatory diagram of a method for estimating rotor temperature on the basis of the temperature detected by a first sensor unit and a second sensor unit;
Fig. 3 is a schematic diagram of a sensor unit in a second embodiment;
Fig. 4 is a schematic diagram of a sensor unit in a third embodiment;
Fig. 5 is a schematic diagram of a sensor unit in a fourth embodiment;
Fig. 6 is a diagram illustrating schematically a turbo-molecular pump according to the embodiments; and
Fig. 7 is a diagram illustrating arrangement locations of sensor units in the embodiments.

1 turbo-molecular pump
2 casing
3 base
5 thread groove spacer
6 inlet port
7 helical groove
8 radial magnetic bearing section
9 displacement sensor
10 motor section
11 rotor shaft
12 radial magnetic bearing section
13 displacement sensor
17 displacement sensor
18 stator column
19 outlet port
20 thrust magnetic bearing section
21 rotor blades
22 stator blades
23 spacer
24 rotor
25 bolt
29 tubular member
30 armature disc
40 protective bearing
48 control device
49 protective bearing
50 sensor unit
51 temperature sensor
52 thin film
53 frame
54 lead wire
60 purge port
70 stator portion
500 sensor unit
520 sensor support portion
600 filling material (sealing material)

700 mounting screw
800 fixing block
P purge gas
G exhaust gas

Preferred embodiments of the present invention are explained next. The embodiments will be explained on the basis of a turbo-molecular pump, as an example of vacuum pump where the temperature of a rotor section is to be detected.

(1) Overview of the embodiments

The turbo-molecular pump in the embodiments uses a thermistor, as a first temperature sensor that is inexpensive and that can sense quantities of heat with good precision, even in case of small changes in heat quantities in the form of, for instance, infrared radiation and/or thermal conduction via rarefied gas in vacuum. Even if the first temperature sensor is in contact with gas at the temperature of the rotor, however, the temperature of the first temperature sensor fluctuates on account of the temperature of sensor unit or the temperature of the stator to which the sensor unit is fixed. This fluctuation impairs measurement precision. Specifically, the output value of the first temperature sensor disposed adjacent to the rotating blades may take on a value lower than the rotor temperature, since the quantity of heat received from the rotor escapes to a dispose portion (stator) at which the first temperature sensor is placed via a support member. Conversely, the output value may take on a higher value on account of absorption heat from the stator.

The quantity of heat thus transferred varies depending on the temperature difference between the temperature sensor and the stator. The temperature of a molecular pump stator varies significantly on account of the heat generated by the motor built into the stator, and on account of heating in order to prevent adhesion of reaction products to the interior of the pump. Therefore, temperature must be compensated due to changes in the temperature of the stator.

In order to prevent temperature changes as much as possible, the thermistor (first temperature sensor) is disposed on the stator in a state where a thin film (fixing member), such as a resin film, and/or a sensor unit (temperature detection means), fixed to a square frame body (sensor frame) by wires, opposes the rotor section that is the target of temperature detection. Assuming the non-negligible influence, in terms of measurement, that is exerted by heat from the frame, stator and so forth on the first temperature sensor (heat flow from/to the frame), the rotor temperature is estimated more accurately by detecting that influence via other sensors, to compensate for the drop or rise in temperature in the first temperature sensor, and estimate thereby more accurately the temperature of the rotor. Specifically, a second temperature sensor, or a second temperature sensor and a third temperature sensor, are disposed for the first temperature sensor, and the temperature of the rotor section is estimated on the basis of a first detection value by the first temperature sensor, and a second detection value (and a third detection value) by the second temperature sensor (and the third temperature sensor).

In a first embodiment, the output temperature of two temperature sensors themselves is deliberately varied by modifying the heat conduction (quantity) of a thin film that constitutes a path for heat release/absorption, and the temperature is estimated on the basis of the resulting difference. Specifically, there is used a second sensor unit that employs a second temperature sensor having the same characteristic as that of the first temperature sensor, and is configured in the same way as in the first sensor unit where the first temperature sensor is disposed. However, the second sensor unit is designed in such a manner that the heat conduction amount from (to) the second temperature sensor differs. The second sensor unit is disposed on the stator in such a manner that the second temperature sensor as well opposes the rotor. The second sensor unit is disposed adjacent to the first sensor unit. The temperature of the rotor is detected by estimating the difference between the first temperature sensor and the rotor (object whose temperature is to be detected) on the basis of the detection values of the first temperature sensor and the second temperature sensor.

In a second embodiment, another temperature sensor is disposed on the heat release-absorption path, and estimation is performed using a detection temperature difference of the other temperature sensor. Specifically, the temperature of a frame of the sensor unit and/or the temperature of the mounting section (stator) of the frame is measured using one sensor unit (first sensor unit). Then, there is estimated the temperature difference between the rotor and the measurement value of the first temperature sensor, on the basis of the temperatures detected by the first temperature sensor and the other sensors, to detect thereby the temperature of the rotor.

(2) Details of the embodiments

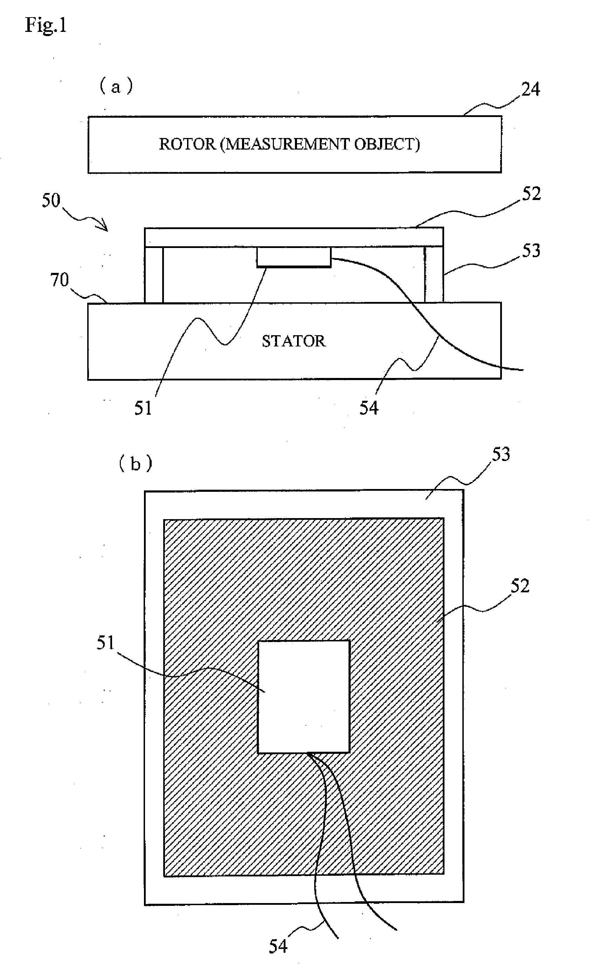

Fig. 1 is a diagram illustrating the configuration of a sensor unit 50 in an embodiment. As illustrated in Fig. 1, the sensor unit 50 comprises a first temperature sensor 51, a thin film 52 that supports the first temperature sensor 51, and a frame 53 that supports the thin film. In the present embodiment, a thermistor is used as the first temperature sensor 51, but there may be used, alternatively, a platinum resistor or a thermocouple. Two lead wires 54 are connected to the first temperature sensor 51. The lead wires 54 are connected to a signal processing circuit (not shown) of a below-described control device 48.

The first temperature sensor 51 is disposed on the thin film 52, in such a way so as to oppose a rotor 24, which is the measurement object, via the thin film 52.

The purpose of the thin film 52 is to fix the first temperature sensor to the frame 53. A resin film is used as the thin film 52. The thin film is preferably thin enough so as to reduce the heat conduction amount, but within a thickness range that allows preserving strength. For instance, there is used a resin film about 20 to 30 $\mu$m thick. The transfer of heat can be further reduced by using two (or three, four and so forth) insulating wires, instead of the thin film 52, to fix the first temperature sensor 51 to the frame. So long as strength can be secured, the first temperature sensor 51 may also be fixed to the frame 53 using two lead wires 54.

Other than square in shape, the frame 53 of the present embodiment may also be, for instance, circular, oval or the like. The frame 53 of the present embodiment is formed of a resin. One face of the frame 53, in the thickness direction, has the thin film 52 fixed thereto, while the side of the other face is fixed to a stator 70, as a stator portion.

In the first embodiment there is used a first sensor unit 50a and a second sensor unit 50b configured as described above. A temperature sensor 51 having the same characteristic is used in each of the sensor units 50a, 50b, but the latter are designed in such a manner that the heat conduction amount in the thin film 52 varies in the two sensor units. Specific methods for varying the heat conduction amount of the thin film 52 include, for instance, using a same frame 53 but modifying the thickness, or the material, of the frame 53. The size of the frame 53 may be modified by modifying the distance from the temperature sensor 51 to the frame 53. Further, a thermal insulator may be wedged between the temperature sensor 51 and the frame 53.

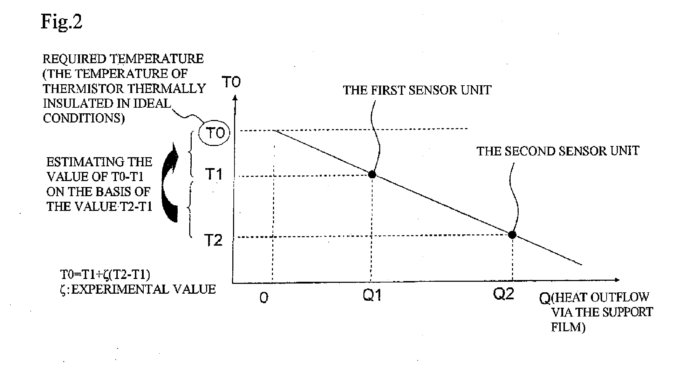

A method for measuring the temperature of a rotor 24 on the basis of the temperature detected by the first sensor unit 50a and the sensor unit 50b having the above configuration is explained next with reference to Fig. 2. The first sensor unit 50a and the second sensor unit 50b are disposed close to each other. A temperature-heat conduction amount characteristic can be obtained such as the one illustrated in Fig. 2. In Fig. 2, T1 denotes the temperature detected by the first temperature sensor 51a, Q1 denotes the heat conduction amount (amount of heat released/absorbed) that is conducted through the thin film 52a of the first sensor unit 50a, T2 denotes the temperature detected by the second temperature sensor 51b, and Q2 denotes the heat conduction amount (amount of heat released/absorbed) that is conducted through the thin film 52b of the second sensor unit 50b. Fig. 2 illustrates an instance of heat release.

The temperature to be worked out, namely T0 (temperature of the stator, i.e., the temperature of the temperature sensor thermally insulated in ideal conditions) is obtained through estimation of the value of T0-T1 on the basis of the value T2-T1. Specifically, the temperature to be worked out, i.e., the temperature T0 of the stator is calculated by the signal processing circuit on the basis of equation (1) below. In Equation (1), $\xi$ denotes a constant obtained experimentally from the heat conduction amounts Q1, Q2 of the two thin films 52a, 52b.

$$T0=T1+\xi(T2-T1)\ldots(1)$$

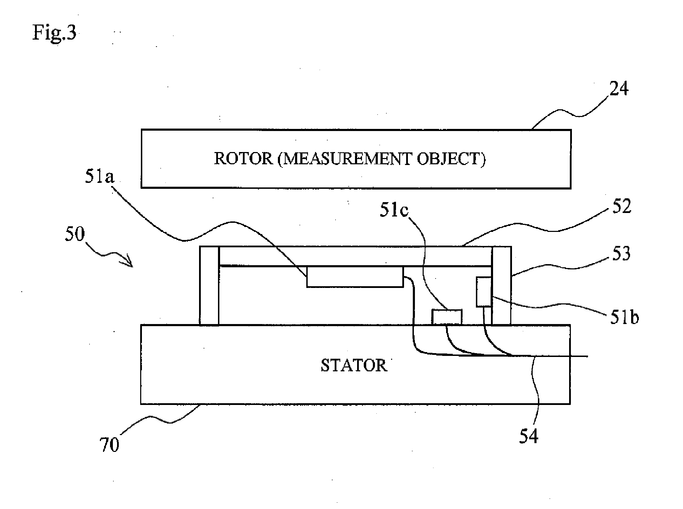

The sensor unit 50 according to a second embodiment is explained next with reference to Fig. 3. In the second embodiment another temperature sensor (second temperature sensor 51b and/or third temperature sensor 51c) is provided, in addition to the first temperature sensor 51a, in one sensor unit 50. As illustrated in Fig. 3, the sensor unit 50 has the first temperature sensor 51a fixed to the central portion of the thin film 52, and the thin film 52 is fixed to one face of the frame 53, as is the case in the first embodiment. In the second embodiment, unlike in the first embodiment, the second temperature sensor 51b that measures the temperature of the frame 53 is disposed on the side face of the frame 53. A third temperature sensor 51c that measures the temperature of the stator 70 is disposed on the stator 70 on which the sensor unit 50 is disposed.

In the sensor unit 50 explained in Fig. 3, the three temperature sensors 51 use all thermistors having the same characteristic, but mutually different temperature sensors may also be used. The three temperature sensors 51 are disposed within a space enclosed by the thin film 52, the frame 53 and the stator 70. This allows, as a result, measuring the temperature of the frame and the stator themselves while making the second temperature sensor 51b and the third temperature sensor 51c less likely to be influenced by heat from gas molecules that flow in the pump. The sensor unit 50 is disposed at a narrow gap between the stator 70 and the rotor 24 of the molecular pump. Therefore, the sensor unit 50 is formed to be as thin as possible, to which end the frame must be likewise thin. Accordingly, the second temperature sensor 51b may be disposed on the outer peripheral face of the frame 53. The third temperature sensor 51c is disposed at a region within the frame 53 so as not to oppose the first temperature sensor 51a (so as not to overlap the latter), but may also be disposed on the stator, outside the frame 53. In that case, the third temperature sensor 51c is disposed as close as possible to the frame 53, but without coming in contact with the latter.

In the sensor unit 50 explained in Fig. 3, the configuration described involves arranging also the second temperature sensor 51b and the third temperature sensor 51c, in addition to the first temperature sensor 51a, although the configuration may be such that either of the second temperature sensor 51b and the third temperature sensor 51c is disposed. An explanation follows next on temperature compensation wherein the temperature detected by the first temperature sensor 51a is compensated using the temperature detected by other temperature sensors, in a first example in which, besides the first temperature sensor 51a, there is additionally disposed the third temperature sensor 51c, in a second example in which there is additionally disposed the second temperature sensor 51b, and in a third example in which both the second temperature sensor 51b and the third temperature sensor 51c are additionally disposed.

(A) Second embodiment, first example (second temperature sensor 51b is not used)

In the simplest method of the first example, temperature is compensated on the basis of the difference between the temperature of the stator 70 and the temperature of the first temperature sensor 51a. The temperature Te1 of the rotor (compensated value of the temperature detected by the first temperature sensor 51a) is calculated on the basis of Equation (2) below. In Equation (2), the temperature detected by the first temperature sensor 51a is T1, and the temperature detected by the third temperature sensor 51c is T3. Further, and ξ are coefficients determined on the basis of ratios of the thermal resistance of the gas present between the rotor (rotating blade) 24 and the sensor, and the thermal resistance of the gas present between the first temperature sensor 51a and the stator 70, as well as that of the support portion (thin film 52 and frame 53).

$$\mathtt{Te1 = \eta1 \times (T1 + \xi1(T1-T3)) - \eta2 \ldots (2)}$$

(B) Second embodiment, second example and third example (second temperature sensor 51b is used)

The thermal conductivity of the gas is smaller than the thermal conductivity of solid parts that support the temperature sensors, and hence heat escapes (flows) out predominantly via the support member. The support portion of the temperature sensor can be divided into a foil and a frame. As regards the heat outflow Q via the support portion, it is assumed that the heat dumped from the support portion to a gas is negligibly small, since the support portion is in vacuum. Under that assumption, the heat outflow Q[A1-A3] between the first temperature sensor 51a and the third temperature sensor 51c via the support portion is given by Equations (3) to (5) below, on the basis of the thermal resistance R[A1-A2] (thermal resistance of the thin film 52) between the first temperature sensor 51a and the second temperature sensor 51b, and the thermal resistance R[A2-A3] (thermal resistance of the frame 53) between the second temperature sensor 51b and the third temperature sensor 51c.
$$\mathtt{Q[A1-A3] = R[A1-A2] \times (T1-T2) \ldots (3)}$$

$$\mathtt{= R[A2-A3] \times (T2-T3) \ldots (4)}$$

$$\mathtt{= R[A1-A3] \times (T1-T3) \ldots (5)}$$

The above equations indicate that the heat outflow amount Q is proportional to the difference between temperatures detected by the temperature sensors, and to the elucidated thermal resistance R between temperature sensors. Therefore, the equations for temperature compensation based on the outflow amount Q are given by Equations (6) and (7) below. In Equation (6), which corresponds to Equation (3), compensation is performed using the temperature difference between the first temperature sensor 51a and the second temperature sensor 51b. In Equation (7), which corresponds to Equation (4), compensation is performed using the temperature difference between the second temperature sensor 51b and the third temperature sensor 51c. Equation (2) above, for a case in which the second temperature sensor 51b is not used, corresponds to Equation (5). The precision in the estimation drops for interposed elements having significantly varying thermal resistance. Accordingly, compensation with greater precision is made possible by arranging the second temperature sensor 51b adjacent to the boundary between the frame 53 and the thin film 52, and by using the measurement value T2 of the second temperature sensor 51b, on the basis of Equation (7).

$$Te1' = \eta1' \times (T1 + \xi1' (T1 - T2)) - \eta2' \quad ... (6)$$

$$Te1'' = \eta1' \times (T1 + \xi1'' (T2 - T3)) - \eta2'' \quad ... (7)$$

In the equations above, $\eta1'$, $\eta2'$, $\eta2''$, $\xi1'$, $\xi1''$ are coefficients determined by the ratios between the thermal resistance of the gas present between rotating blades and the sensor, and the thermal resistance between temperature measurement positions in the support portion.

Equation (6) and Equation (7) can be selectively used depending on the configuration. If the thickness of the thin film 52 is small, for instance, controlling the variability of the thickness is difficult. As a result, the difference between sensors for the thermal resistance R[A1-A2] is larger, and compensation precision poorer. Hence, Equation (7) is used in this case. On the other hand, using Equation (6) is more appropriate if the thermal conductivity of the frame 53 is high and the temperature difference between T2 and T3 small, as a result of which the measurement precision of that temperature difference cannot be ensured.

The arrangement position of the second temperature sensor 51b is not limited strictly to the boundary between the thin film 52 and the frame 53. If the second temperature sensor 51b has a thermal resistance factor R, and the temperature difference therebetween can be measured then, the second temperature sensor 51b can be disposed at any position between the first temperature sensor 51a and the third temperature sensor 51c that is disposed on the stator 70. Also, a structural member other than the frame 53 and the thin film 52 may be disposed in the above path. Compensation is performed then on the basis of the thermal resistance and temperature difference therebetween. The third temperature sensor 51c may be disposed on the stator 70. A sensor that measures the temperature of the motor and/or of an electric component in the stator 70 can be used in the third temperature sensor 51c. The second embodiment of the present invention encompasses the above-described temperature sensors as a form of contact-less temperature sensor.

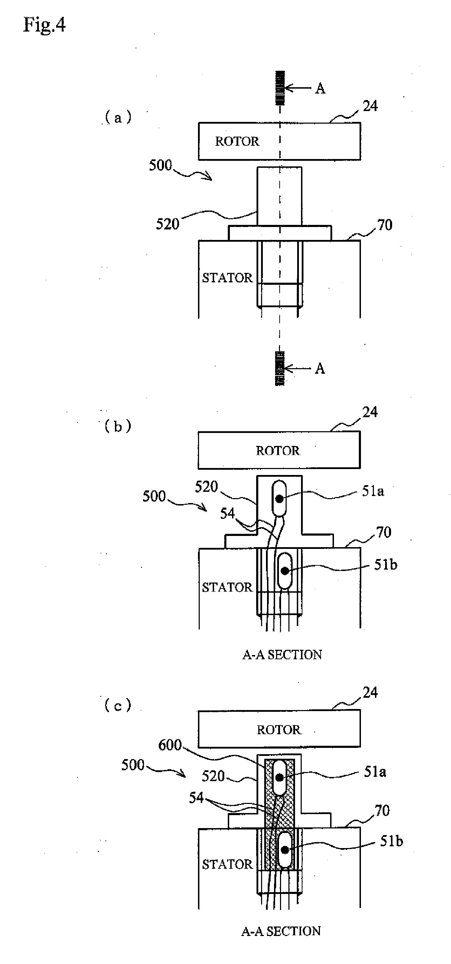

A sensor unit 500 according to a third embodiment is explained with reference to Fig. 4. Fig. 4A illustrates the outer appearance of the sensor unit 500 according to the third embodiment, and Fig. 4B illustrates a cross-sectional diagram of Fig. 4A along A-A. As illustrated in Fig. 4B, the sensor unit 500 comprises the first temperature sensor 51a, the second temperature sensor 51b, and a sensor support portion 520 that supports the first temperature sensor 51a and the second temperature sensor 51b, such that the first temperature sensor 51a and the second temperature sensor 51b are integrally molded with, and sealed within, the sensor support portion 520, one face of which in the thickness direction opposes, in a contact-less manner, the rotor 24 as the measurement object, while the side of the other face of the sensor support portion 520 is partially sealed within, and fixed to, the stator 70 as the stator portion. In the third embodiment, thermistors are used as the first temperature sensor 51a and the second temperature sensor 51b, but there may be used, alternatively, a platinum resistor or a thermocouple. Two lead wires 54 are connected to each of the first temperature sensor 51a and the second temperature sensor 51b. The lead wires 54 are connected to a signal processing circuit (not shown) of a below-described control device 48.

The first temperature sensor 51a is sealed in the sensor support portion 520 in such a way so as oppose the rotor 24, as the measurement object, via the sensor support portion 520, at a position closer to the rotor 24 than that of the second temperature sensor 51b. The second temperature sensor 51b is sealed in the sensor support portion 520 and is disposed so as to be sealed within the stator 70, as the measurement object, via the sensor support portion 520.

The purpose of the sensor support portion 520 is to fix the first temperature sensor 51a and the second temperature sensor 51b to the stator 70, and thus the sensor support portion 520 is fixed to the stator 70 in such a manner that one face of the sensor support portion 520 in the thickness direction opposes, in a contact-less manner, the rotor 24 as the measurement object, while the side of the other face is partially sealed within the stator 70 as the stator portion. A material having low thermal conductivity (for instance, a resin), is used in the sensor support portion 520. In order to fix the first temperature sensor 51a and the second temperature sensor 51b to the stator 70 there may be used two (or, for instance, three or four) insulating wires, instead of the sensor support portion 520, so as to further reduce heat transfer. The first temperature sensor 51a and the second temperature sensor 51b may be fixed to the stator 70 using the four lead wires 54 so long as strength can be secured.

The sensor support portion 520 in the third embodiment is square-shaped, but may take on other shapes, such as circular or oval, provided that the above-described configuration is preserved.

Once the first temperature sensor 51a and the second temperature sensor 51b have been inserted into the sensor support member 520, the latter can be sealed with a filling material (sealing material) 600 (for instance, a resin), as illustrated in Fig. 4C. Alternatively, the periphery of the first temperature sensor 51a and the second temperature sensor 51b may be fixed with the filling material 600, after which the first temperature sensor 51a and the second temperature sensor 51b are inserted into the sensor support member 520.

The second temperature sensor 51b need not necessarily be disposed in the sensor support portion 520, and may be disposed on the stator 70. A sensor that measures the temperature of an electrical part and/or the motor in the stator can be used in the second temperature sensor 51b. The third embodiment of the present invention encompasses the above-described temperature sensors as a form of contact-less temperature sensor.

An explanation follows next on temperature compensation in the sensor unit 500 having the above configuration, wherein the temperature detected by the first temperature sensor 51a is compensated using the temperature detected by the second temperature sensor 50b. In the simplest compensation method of the third embodiment, the temperature is compensated on the basis of the difference between the temperature of the first temperature sensor 51a (i.e., the temperature of the rotor 24) and the temperature of the second temperature sensor 51b (i.e., the temperature of the stator 70). The temperature Te1 of the rotor (compensated value of the temperature detected by the first temperature sensor 51a) is calculated on the basis of Equation (2) below. In Equation (2), T1 is the temperature detected by the first temperature sensor 51a, the T2 the temperature detected by the second temperature sensor 51b. Further, η and ξ are coefficients determined on the basis of ratios of the thermal resistance of the gas present between the rotor (rotating blade) 24 and the sensor unit 500, and the thermal resistance of the sensor support portion 520.

$$\mathtt{Te1=\eta1\times(T1+\xi1(T1-T2))-\eta2\ldots(2)}$$

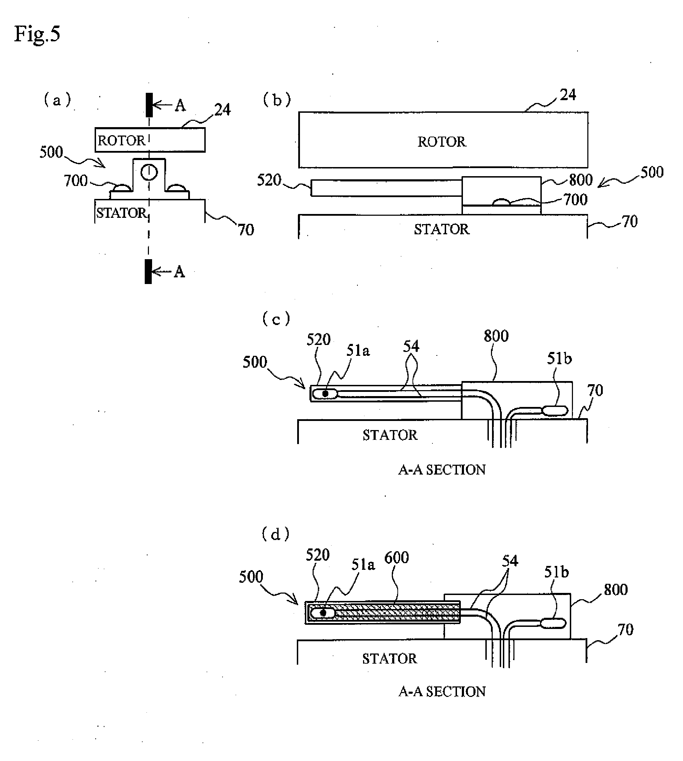

A sensor unit 500 according to a fourth embodiment is explained with reference to Fig. 5. Fig. 5A is a diagram illustrating the outer appearance of a sensor unit 500 according to the fourth embodiment. The sensor unit 500 is fixed to the stator 70 through a mounting screw 700, as illustrated in Fig. 5A. Fig. 5B illustrates the sensor unit 500 from a direction rotated by 90° with respect to that in Fig. 5A. Fig. 5C illustrates a cross-sectional diagram of Fig. 5A along A-A. As illustrated in Fig. 5C, the sensor unit 500 comprises the first temperature sensor 51a; the second temperature sensor 51b; a fixing block 800 that fixes the first temperature sensor 51a and the second temperature sensor 51b, such that part of the lead wires 54 of the first temperature sensor 51a and the entirety of the second temperature sensor 51b are sealed inside the fixing block 800, and one face of the fixing block 800, in the thickness direction thereof, opposes, in a contact-less manner, the rotor 24 as the measurement object, while the side of the other face of the fixing block 800 is partially sealed within, and fixed to, the stator 70 as the stator portion; and a sensor support portion 520 that supports the first temperature sensor 51a, such that the first temperature sensor 51a is sealed within the sensor support portion 520 (i.e., the sensor support portion 520 is integrally molded with the first temperature sensor 51a), and one face of the sensor support portion 520, in the thinness direction thereof, opposes, in a contact-less manner, the rotor 24 as the measurement object, the other face opposes, in a contact-less manner, the stator 70 as the stator portion, and part of one face of the sensor support portion 520, in the thickness direction, is partially sealed within, and fixed to, the fixing block 800. In the fourth embodiment, thermistors are used as the first temperature sensor 51a and the second temperature sensor 51b, but there may be used, alternatively, a platinum resistor or a thermocouple. Two lead wires 54 are connected to each of the first temperature sensor 51a and the second temperature sensor 51b. The lead wires 54 are connected to a signal processing circuit (not shown) of a below-described control device 48.

The first temperature sensor 51a is sealed in the sensor support portion 520, and is disposed in such a manner that the side of the temperature sensing portion of the first sensor 51a opposes the rotor 24, as the measurement object, via the sensor support portion 520. The second temperature sensor 51b is sealed in the fixing block 800, and is disposed so as to oppose the stator 70, as the measurement object, via the fixing block 800.

The purpose of the sensor support portion 520 is to fix the first temperature sensor 51a to the fixing block 800. Thus, the sensor support portion 520 is fixed to the fixing block 800 in such a manner that one face of the sensor support portion 520 in the thinness direction opposes, in a contact-less manner, the rotor 24, as the measurement object, while the side of the other face is opposes the stator 70, as the stator portion. A material having low thermal conductivity (for instance, a resin), is used in the sensor support portion 520. The purpose of the fixing block 800 is to fix the first temperature sensor 51a and the second temperature sensor 51b to the stator 70. One face of the fixing block 800 in the thickness direction opposes, in a contact-less manner, the rotor 24, as the measurement object, while the side of the other face is partially sealed within, and fixed to, the stator 70, as the stator portion. A material having low thermal conductivity (for instance, a resin), is used in the fixing block 800. In order to fix the first temperature sensor 51a and the second temperature sensor 51b to the stator 70 there may be used two (or, for instance, three or four) insulating wires, instead of the sensor support portion 520 and the fixing block 800, so as to further reduce thereby heat transfer. The first temperature sensor 51a and the second temperature sensor 51b may be fixed to the stator 70 using the four lead wires 54 so long as strength can be secured.

The sensor support portion 520 and the fixing block 800 in the fourth embodiment are square-shaped, but may take on other shapes, such as circular or oval, provided that the above-described configuration is preserved.

Once the first temperature sensor 51a has been inserted into the sensor support member 520, the latter can be sealed with a filling material (sealing material) 600 (for instance, a resin), as illustrated in Fig. 5(d). Alternatively, the periphery of the first temperature sensor 51a may be fixed with the filling material 600, after which the first temperature sensor 51a is inserted into the sensor support member 520. The second temperature sensor 51b need not necessarily be disposed in the fixing block 800, and may be disposed in the stator 70. A sensor that measures the temperature of an electrical part and/or the motor in the stator can be used in the second temperature sensor 51b. The fourth embodiment of the present invention encompasses the above-described temperature sensors as a form of contact-less temperature sensor.

An explanation follows next on temperature compensation in the sensor unit 500 having the above configuration, wherein the temperature detected by the first temperature sensor 51a is compensated using the temperature detected by the second temperature sensor 50b. In the simplest compensation method in the fourth embodiment, the temperature is compensated on the basis of the difference between the temperature of the first temperature sensor 51a (i.e., the temperature of the rotor 24) and the temperature of the second temperature sensor 51b (i.e., the temperature of the stator 70). The temperature Te1 of the rotor (compensated value of the temperature detected by the first temperature sensor 51a) is calculated on the basis of Equation (2) below. In Equation (2), T1 is the temperature detected by the first temperature sensor 51a, the T2 the temperature detected by the second temperature sensor 51b. Further, $\eta$ and $\xi$ are coefficients determined on the basis of ratios of the thermal resistance of the gas present between the rotor (rotating blade) 24 and the sensor unit 500, and the thermal resistance of the sensor support portion 520 and the fixing block 800.

$$\mathtt{Te1=\eta1\times(T1+\xi1(T1-T2))-\eta2...(2)}$$

As explained above, the sensor units in the first, second, third and fourth embodiments allow measuring rotor temperature more accurately through temperature compensation of the influence of heat conduction from the first temperature sensor, by using temperature differences on the basis of measurement values from other temperature sensors. Some infrared temperature sensors are provided with a temperature sensor for compensation, but this temperature sensor for compensation corrects changes in the difference of the amount of received infrared rays (radiation from the measurement object minus radiation from the sensor) due to changes in the temperature of the sensor itself. The underlying principle is thus different from that of the present embodiments.

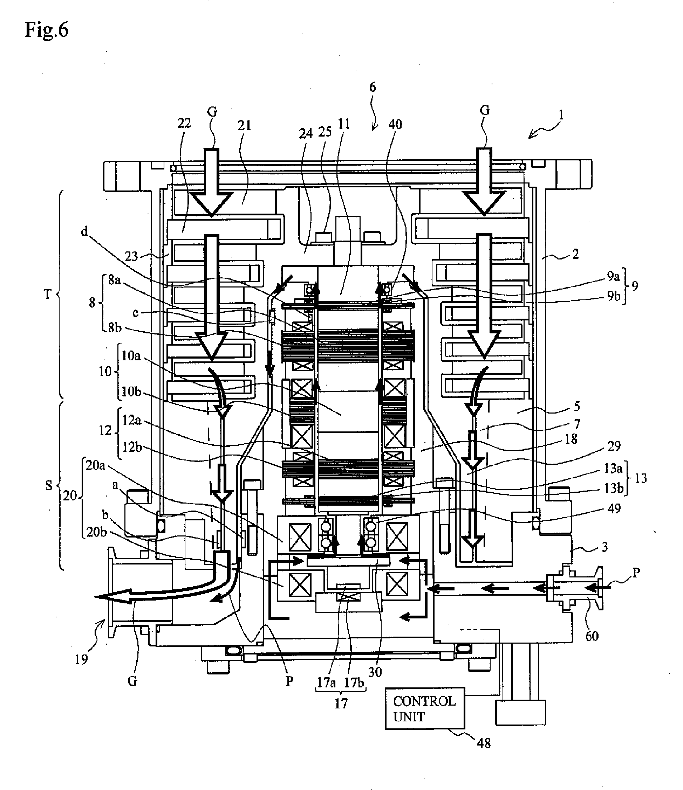

An explanation follows next on the configuration of a turbo-molecular pump, as a molecular pump in which a sensor unit having the above-described configuration is disposed, and on the arrangement site of the sensor unit. Fig. 6 is a diagram illustrating schematically a turbo-molecular pump 1 of the present embodiment. Fig. 6 illustrates a cross-sectional diagram of the turbo-molecular pump 1 along an axis line direction. In the present embodiment there is explained an example of the turbo-molecular pump 1 on the basis of an example of a so-called composite-blade molecular pump provided with a turbo-molecular pump section T and a thread groove-type pump section S. The present embodiment may also be used in a pump having only the turbo-molecular pump section T, or in a pump wherein the thread groove is provided on the side of a rotary body.

A casing 2 that forms a casing of the turbo-molecular pump 1 is shaped as a tube, and makes up the casing of the turbo-molecular pump 1 together with a base 3 that is provided at the bottom of the casing 2. In the interior of the casing of the turbo-molecular pump 1 there is housed a gas transfer mechanism, namely a structure that performs the function of evacuating the turbo-molecular pump 1. The gas transfer mechanism in the turbo-molecular pump 1 comprises the turbo-molecular pump section T on the side of an inlet port 6, and a thread groove-type pump section S on the side of an outlet port 19. The structure that brings about that evacuation function comprises broadly a rotor portion rotatably supported and a stator portion fixed to the casing 2.

A control device 48 for controlling the operation of the turbo-molecular pump 1, provided outside the casing of the turbo-molecular pump 1, is connected to the casing of the turbo-molecular pump 1 via a dedicated line. The control device 48 comprises a signal processing circuit, not shown. The lead wires of the various temperature sensors 51 are connected to the signal processing circuit. The signal processing circuit of the control device 48 performs the calculations according to the above-described Equations (1), (2), (6) or (7), to detect thereby the temperature of the rotor 24.

The rotor portion comprises a rotor shaft 11 that rotates by means of a below-described motor section 10, and the rotor 24. The rotor shaft 11 is a solid-cylindrical rotary shaft (rotor shaft). The rotor 24 is mounted, through a plurality of bolts 25, to the top end of the rotor shaft 11. The rotor 24 comprises, for instance, a rotary member disposed on the rotor shaft 11. The rotor 24 comprises, for instance, rotor blades 21 provided on the side of the inlet port 6 (turbo-molecular pump section T), and a tubular member 29 provided on the side of the outlet port 19 (thread groove-type pump section S). The rotor blades 21 comprise a plurality of blades that extend radially from the rotor 24 and are tilted at a predetermined angle with respect to a plane perpendicular to the axis line of the rotor shaft 11. The rotor blades 21 of the turbo-molecular pump 1 are provided as a plurality of stages in the axis line direction. The rotor 24 is made up of a metal such as stainless steel or an aluminum alloy. The tubular member 29 comprises a member the outer peripheral face whereof is shaped as a tube.

A motor section 10 that rotates the rotor shaft 11 is disposed halfway in the axis line direction of the rotor shaft 11. As an example, the motor section 10 in the present embodiment comprises a DC brushless motor. A permanent magnet 10a is fixed to the site that makes up the motor section 10 in the rotor shaft 11. The permanent magnet 10a is fixed in such a manner that, for instance, the N-pole and the S-pole thereof are disposed at 180° about the rotor shaft 11. Around the permanent magnet 10a there are opposingly disposed, for instance, six electromagnets 10b at intervals of 60°, symmetrically with respect to the axis line of the rotor shaft 11, with a predetermined gap (clearance) left between the electromagnets and the rotor shaft 11. The permanent magnet 10a functions as a rotor portion (rotary portion) of the motor section 10. The electromagnets 10b function as a stator section (stator portion) of the motor section 10.

The turbo-molecular pump 1 comprises a sensor that detects the revolutions and the rotation angle (phase) of the rotor shaft 11. By this sensor, the control device 48 can detect the position of the magnetic poles of the permanent magnet 10a that is fixed to the rotor shaft 11. The control device 48 consecutively switches current in the electromagnets 10b of the motor section 10 in accordance with the position of the detected magnetic poles, to generate thereby a rotating magnetic field around permanent magnet 10a of the rotor shaft 11. The permanent magnet 10a fixed to the rotor shaft 11 follows that rotating magnetic field, and rotates the rotor shaft 11 as a result.

A radial magnetic bearing section 8 and a radial magnetic bearing section 12 that pivotally support the rotor shaft 11 in the radial direction, i.e., that support the load of the rotor portion in the radial direction, are respectively provided at the inlet port 6 side and the outlet port 19 side of the motor section 10. A thrust magnetic bearing section 20 that pivotally supports the rotor shaft 11 in the axis line direction (thrust direction), i.e., that supports the load of the rotor portion in the thrust direction, is provided at the lower end of the rotor shaft 11. The rotor shaft 11 (rotor portion) is supported in the radial direction (direction of the radius of the rotor shaft 11), in a contact-less manner, by the radial magnetic bearing sections 8, 12, and is supported in the thrust direction (axial direction of the rotor shaft 11), in a contact-less manner, by the thrust magnetic bearing section 20. The above magnetic bearings make up a so-called five-axis control-type magnetic bearing, such that the rotor shaft 11 has only one degree of freedom, namely rotation about the axis line.

In the radial magnetic bearing section 8, for instance, four electromagnets 8b are opposingly disposed, at 90° intervals around the rotor shaft 11. The electromagnets 8b are arranged with a gap (clearance) to the rotor shaft 11. The value of the gap takes on a value arrived at in consideration of, for instance, the steady-state amount of vibration (runout amount) of the rotor shaft 11, the spatial distance between the rotor 24 and the stator section (stator portion), and the performance of the radial magnetic bearing section 8. A target 8a is formed in the rotor shaft 11, opposing the electromagnets 8b. The target 8a is attracted by the magnetic force of the electromagnets 8b of the radial magnetic bearing section 8, as a result of which the rotor shaft 11 is supported, in a contact-less manner, in the radial direction. The target 8a functions as a rotor section of the radial magnetic bearing section 8, and the electromagnets 8b function as a stator section of the radial magnetic bearing section 8. The radial magnetic bearing section 12 is configured in the same way as in the radial magnetic bearing section 8, specifically, in that a target 12a is attracted by the magnetic force of the electromagnets 12b of the radial magnetic bearing section 12, whereby the rotor shaft 11 is supported, in a contact-less manner, in the radial direction.

The thrust magnetic bearing section 20 causes the rotor shaft 11 to float in the axial direction by an interposed disc-like metallic armature disc 30 that is provided perpendicularly to the rotor shaft 11. In the thrust magnetic bearing section 20, for instance two electromagnets 20a, 20b are disposed opposing each other across the armature disc 30. The electromagnets 20a, 20b are arranged with a gap between the electromagnets 20a, 20b and the armature disc 30. This gap takes on a value arrived at in consideration of, for instance, the steady-state amount of vibration of the rotor shaft 11, the spatial distance between the rotor 24 and the stator section, and the performance of the thrust magnetic bearing section 20. The armature disc 30 is attracted by the magnetic force of the electromagnets of the thrust magnetic bearing section 20, as a result of which the rotor shaft 11 is supported, in a contact-less manner, in the thrust direction (axis line direction).

Displacement sensors 9, 13 are respectively formed adjacent to the radial magnetic bearing sections 8, 12, in such a way so as be capable of detecting displacement of the rotor shaft 11 in the radial direction. A displacement sensor 17 is formed at the lower end of the rotor shaft 11 in such a way so as be capable of detecting the displacement of the rotor shaft 11 in the axis line direction. The displacement sensors 9, 13 are elements that detect the displacement of the rotor shaft 11 in the radial direction. In the present embodiment, the displacement sensors 9, 13 are inductive-type sensors, such as eddy current sensors or the like, provided with coils 9b, 13b.

The coils 9b, 13b of the displacement sensors 9, 13 make up part of an oscillation circuit formed in the control device 48 that is disposed outside the turbo-molecular pump 1. In response to oscillation by the oscillation circuit, a high-frequency current flows through the displacement sensor 9, that generates a high-frequency magnetic field on the rotor shaft 11. The oscillation amplitude of the oscillation circuit changes accompanying changes in the distance between the displacement sensors 9, 13 and the targets 9a, 13a. The displacement sensors can detect the displacement of the rotor shaft 11 thereby. The sensor used for detecting the displacement of the rotor shaft 11 is not particularly limited to the above, and may be, for instance, a capacitive sensor, an optical sensor or the like.

Upon detection of displacement of the rotor shaft 11 in the radial direction, according to signals from the displacement sensors 9, 13, the control device 48 adjusts the magnetic force of the electromagnets 8b, 12b of the radial magnetic bearing sections 8, 12, thereby to return the rotor shaft 11 to a predetermined position. Thus, the control device 48 performs feedback control of the radial magnetic bearing sections 8, 12 on the basis of signals from the displacement sensors 9, 13. As a result, the rotor shaft 11 levitates magnetically in the radial direction, with a predetermined gap (clearance) to the electromagnets 8b, 12b. The rotor shaft 11 is thus held the space, in a contact-less manner, in the radial magnetic bearing sections 8, 12.

Similarly to the displacement sensors 9, 13, the displacement sensor 17 comprises a coil 17b. Displacement in the thrust direction is detected through detection of the distance to a target 17a that is provided on the side of the rotor shaft 11 opposing the coil 17b. Upon detection of displacement of the rotor shaft 11 in the thrust direction, on the basis of a signal from the displacement sensor 17, the control device 48 adjusts the magnetic force of the electromagnets 20a, 20b of the thrust magnetic bearing section 20, thereby to return the rotor shaft 11 to a predetermined position. Thus, the control device 48 performs feedback control of the thrust magnetic bearing section 20 on the basis of a signal from the displacement sensor 17. As a result, the rotor shaft 11 levitates magnetically in the thrust direction, with a predetermined clearance from the electromagnets, in the thrust magnetic bearing section 20. The rotor shaft 11 is thus held in space in a contact-less manner in the thrust magnetic bearing section 20. That is, the rotor shaft 11 is held by the radial magnetic bearing sections 8, 12 in the radial direction, and is held by the thrust magnetic bearing section 20 in the thrust direction. The rotor shaft 11 rotates as a result in such a way so as rotate about the axis line.

A gas transfer mechanism, namely the stator section (stator portion) having a structure for performing an evacuation function, is formed inside the casing 2 and the base 3. The stator section comprises, for instance, stator blades 22 provided on the side of the inlet port 6 (turbo-molecular pump section T), a thread groove spacer 5 provided on the side of the outlet port 19 (thread groove-type pump section S), as well as a stator column 18. The stator blades 22 comprise a plurality of blades that extend from the inner peripheral face of the casing 2 towards the rotor shaft 11 and that are tilted at a predetermined angle with respect to a plane perpendicular to the axis line of the rotor shaft 11. In the turbo-molecular pump section T, the stator blades 22 are formed at a plurality of stages, alternately with the rotor blades 21, in the axis line direction. The stator blades 22 of each stage are spaced apart from each other by tubular spacers 23.

The thread groove spacer 5 is a tubular member having a helical groove 7 formed in the inner peripheral face, and formed to a thinner wall thickness on the side of the outlet port 19 (adjacent to the base 3). The inner peripheral face of the thread groove spacer 5 opposes the outer peripheral face of the tubular member 29, with a predetermined gap left in between. The direction of the helical groove 7 formed in the thread groove spacer 5 is the direction in which gas moves towards the outlet port 19, in a case where gas is transported, along the helical groove 7, in the rotation direction of the rotor 24. The depth of the helical groove 7 is set so as to grow shallower nearer the outlet port 19. The gas transported along the helical groove 7 becomes compressed as it approaches the outlet port 19.

The base 3 comprises the casing 2 as well as the casing of the turbo-molecular pump 1. The tubular stator column 18, which is formed concentrically with the rotation axis line of the rotor portion, is mounted at the center of the base 3, in the radial direction, on the side of the inlet port 6. The motor section 10 and the radial magnetic bearing sections 8, 12 are disposed inside the stator column 18. In the turbo-molecular pump 1, a protective bearing 40 is provided on the inlet port 6 side of the displacement sensor 9, and a protective bearing 49 is provided on the outlet port 19 side of the displacement sensor 13. The protective bearings 40, 49 are bearings for supporting the rotor shaft 11, for instance upon startup and stop of the turbo-molecular pump 1, or at times when the radial magnetic bearing sections 8, 12 and/or the thrust magnetic bearing section 20 are not working normally (touchdown), for instance during a power outage.

A purge port 60 is provided on the outer peripheral face of the base 3. The purge port 60 communicates with the inner region of the base 3, i.e., with the electric component receiving section, via a purge gas flow path. The purge gas flow path is a horizontal through-hole formed so as to run through, in the radial direction, from the outer peripheral wall face to the inner peripheral wall face of the base 3. The purge gas flow path functions as a purge gas supply path along which a purge gas that is supplied (introduced) from the purge port 60 is fed into the electric component receiving section. A gas supplying device, not shown, that supplies purge gas into the purge port 60, is connected to the other end of the purge port 60.

The function of the purge gas introduced from the purge port 60 is explained next. When the turbo-molecular pump 1 is used for evacuating a vacuum vessel in which a semiconductor device manufacturing apparatus is provided, for instance for evacuating a vacuum vessel of an etching apparatus or a chemical vapor deposition apparatus (CVD), it is often the case that the gas evacuated from the vacuum vessel comprises a process gas in the form of a corrosive gas. If such a corrosive gas gets into the turbo-molecular pump 1 via the inlet port 6, the gas may corrode electric components (electrical parts), protective bearings, the rotor shaft 11 and so forth that have not been subjected to an anti-corrosion treatment which are in the turbo-molecular pump 1. Accordingly, a purge gas, for instance an inert gas such as nitrogen gas or argon gas, is supplied to the electric component receiving section via the purge port 60, in such a way so as protect the electric components against the corrosive gas.

As indicated by arrow P in Fig. 6, the purge gas introduced via the purge port 60 is led into the base 3 and the stator column 18, passes between the stator and the rotor at the motor section 10 and the magnetic bearings 8, 12, moves towards the top of the rotor shaft 11, and is further led, between the stator column 18 and the inner peripheral face of the rotor 24, towards the outlet port 19, through which the purge gas is discharged out of the turbo-molecular pump 1 together with the gas that is taken in through the inlet port 6. The outline arrows G in Fig. 6 indicate the flow of gas molecules that are taken in through the inlet port 6.

The turbo-molecular pump 1 having the above-described configuration is used as a vacuum pump during evacuation of a vacuum vessel, for instance a process chamber or the like the interior of which is kept at a high vacuum and in which there is provided, for instance, a semiconductor manufacturing apparatus.

Arrangement sites of the above-described sensor unit 50 and sensor unit 500 in the turbo-molecular pump 1 having the above configuration are explained next. The sensor unit 50 or the sensor unit 500 may be arranged at any site, so long as the first temperature sensor 51 opposes the rotor 24 and is fixed to the stator 70, although the sensor unit is preferably disposed at any of the four sites a through d shown in Fig. 6.

(a) First arrangement location a

In the first arrangement location a, the sensor is disposed adjacent to the outlet port / outer diameter portion of the stator column 18, to measure the temperature of the inner diameter portion of the rotor 24 (rotor blades 21). The evacuating elements (turbo-molecular pump section T and thread groove pump section S) compress the interior of the exhaust flow path indicated by the outlined arrow G, as a result of which the temperature and pressure of the gas fluctuate significantly. In a case where the rotor 24 is integrally molded out of a light alloy material having high thermal conductivity, the specific heat of the rotor 24 is greater than that of the exhaust gas, and hence any local rise in the temperature of the gas is dissipated into the interior of the structure, in the rotor 24 that is in contact with the gas. Accordingly, the temperature distribution in the rotor blade structure tends to be smaller than the local temperature distribution of the gas. The first temperature sensor 51 of the present embodiment measures the gas temperature, and hence acquires also the local temperature distribution of the gas. Accordingly, there is a chance that the sensor generates an excessive output. Preferably, therefore, the sensor is disposed at a site other than the exhaust flow path G, and consequently the sensor unit is disposed at the first arrangement location a.

The first temperature sensor 51 of the present embodiment measures the temperature of the rotor 24, indirectly and in a contact-less manner, by coming in contact with gas that has the same temperature of the rotor 24 through having come into contact with the rotor 24. The operation of the first temperature sensor 51 is therefore more stable when the latter is arranged at a portion, inside the vacuum pump, where pressure is higher (portion where gas molecules are abundant). The site near the downstream outlet port 19 is a high-pressure portion within the pump. Therefore, the first arrangement location a is set at a downstream section inwards of the rotor 24, and the sensor unit 50 or the sensor unit 500 is preferably disposed at the first arrangement location a, in terms of ensuring a stable operation.

(b) Second arrangement location b, b'

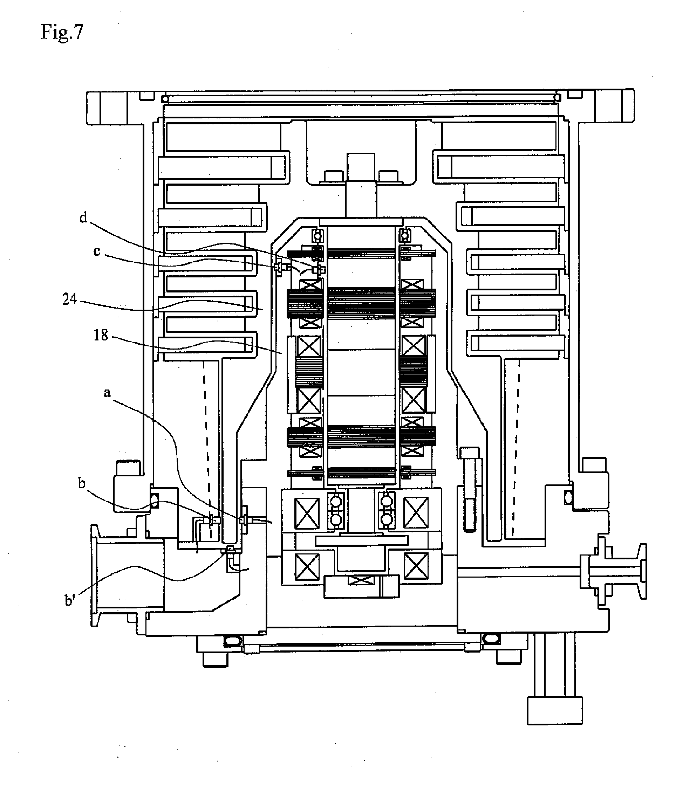

The gas exhaust flow rate is very small. Therefore, the sensor is preferably disposed within the gas flow path in order to secure the pressure of the sensor measurement atmosphere, under conditions where the pressure inside the pump is low and the pressure and temperature distributions of the gas are not significantly uneven. The sensor may also be disposed at a gas outlet portion within the gas flow path (b'), as shown in the arrangement site overview of Fig. 7. The second arrangement location b is therefore set under the above conditions, and the sensor unit 50 or the sensor unit 500 is disposed on the inner diameter face of the thread groove spacer 5 in such a manner that the first temperature sensor 51 opposes the outer diameter portion of the rotor 24 adjacent to the outlet port.

(c) Third arrangement location c

In the third arrangement location c, the sensor is disposed at a site near to a fastening section of the rotor shaft 11 and outer diameter portion of the stator column 18, and the sensor measures the temperature of the inner diameter portion of the rotor 24. As described above, the gas being evacuated may comprise highly corrosive gas. Therefore, a purge gas P is caused to flow within the stator, in order to prevent the corrosive gas from intruding in the stator, into which there are built electric components of the magnetic bearings, the protective bearings and the rotor shaft 11. The portion of the rotor 24 at which the effect of preventing intrusion of the corrosive gas, elicited by the purge gas, is highest, is located adjacent to the fastening section of the rotor shaft 11 and the inward side of the rotor 24. As explained above, the rotor 24 is integrally molded out of an aluminum alloy material, and hence the temperature distribution within the parts is sufficiently small. Therefore, the sensor unit 50 or the sensor unit 500 is disposed at the third arrangement location, as an optimal arrangement for reducing the risk of corrosion of the sensor parts, while preserving measurement precision.

(d) Fourth arrangement location d

For the same reasons as in the third arrangement location c, the fourth arrangement location d is set opposing the rotor shaft 11, inward of the stator column 18, such that the sensor unit 50 or the sensor unit 500 is disposed at the fourth arrangement location d, to measure the temperature of the rotor shaft 11. The fourth arrangement location d is a portion of the rotor shaft 11 adjacent to the rotor 24. At the fourth arrangement location d, the effect of preventing intrusion of the corrosive gas, elicited by the purge gas P, is high, and structural protection of the sensor unit 50 or the sensor unit 500 is optimal. The temperature difference vis-à-vis the rotor 24 is small, so long as the arrangement site is close to a fastening surface with the rotor 24. Therefore, the temperature of the rotor 24 can be estimated by measuring the temperature of the rotor shaft 11, although precision is lower than in other configurations.

In order to lead the signal wires (lead wires 54) of the sensor unit 50 or the sensor unit 500 out of the pump and towards the control device 48, the signal wires must be led out through a vacuum connector. In another method, the signal wires must pass through the base 3 or the stator column 18. The gap between the through-section and the signal lead wires must be sealed to prevent corrosive gas from traversing this through-section and intruding into the base and/or the stator, to corrode the parts that are present therein. This entails a complex structure that is costlier and less reliable. In the fourth arrangement location d, the signal lead wires can be provided together with electric parts within the stator column, and be mold-sealed therein, by arranging the sensor inward of the stator column 18. Accordingly, the above-described through-section is no longer necessary, which translates into lower costs and greater reliability.

The following effects can be elicited by arranging the sensor units according to the various embodiments at any of the above-described first to fourth arrangement locations a to d. (1) Temperature can be measured accurately in vacuum using an inexpensive sensor (thermistor or thermocouple). (2) Thanks to the high precision, the temperature of a rotary body can be measured on the basis of heat conduction, via a gas, even in a rarefied pressure environment. Accordingly, the temperature of the rotor 24 can be monitored by arranging the units at sites where pressure is comparatively high within the molecular pump, even if no infrared radiation surface is provided in the rotor 24. The costs incurred in providing radiation surfaces can be thus avoided.

**Claims**

1.  A vacuum pump, comprising:

    A casing (2) provided with an inlet port (6) and an outlet port (19);
    a stator portion (70) provided inside the casing (2);
    a shaft rotatably supported inside the casing (2); and
    a rotor (24) disposed on the shaft and provided with a gas transfer mechanism that transfers a gas from the inlet port (6) to the outlet port (19),
    the vacuum pump further comprising:

    a rotor portion arranged with a predetermined clearance between the stator portion (70) and the rotor portion;
    a motor (10) that rotates the shaft;
    temperature detection means having at least two contact-less temperature sensors, one of which is disposed opposing the rotor (24); and
    temperature estimation means for estimating a temperature of the rotor (24) on the basis of an output value from each of the temperature sensors of the temperature detection means.

2.  The vacuum pump according to claim 1, wherein
    the temperature detection means is formed of a first sensor unit and a second sensor unit each having a frame body, a fixing member disposed on one face of the frame body, and a temperature sensor fixed to the fixing member, and

a heat conduction amount of at least one of the fixing member and the frame body differs between the first sensor unit and the second sensor unit.

3.  The vacuum pump according to claim 1, wherein the temperature detection means is formed of a sensor unit (500) that has a frame body, a fixing member disposed on one face of the frame body, a first temperature sensor fixed to the fixing member, and at least one of a second temperature sensor fixed to the frame body and a third temperature sensor fixed to the stator portion.

4.  The vacuum pump according to any one of claims 1 to 3, wherein the temperature detection means is disposed at the stator portion (70), opposing the rotor, adjacent to the outlet port (19).

5.  The vacuum pump according to any one of claims 1 to 3, wherein the temperature detection means is disposed at the stator portion (70), opposing the rotor (24), in a flow path of a purge gas that flows out of the outlet port, the flow path being an inner space of the rotor (24).

6.  The vacuum pump according to claim 1, wherein
    the temperature detection means has a having thermal resistance, and
    the at least two contact-less temperature sensors (51) are supported by the support portion and are disposed at the stator portion opposing the rotor (24).

7.  The vacuum pump according to claim 1, wherein
    the temperature detection means has a support portion having thermal resistance, and
    one temperature sensor (51) disposed opposing the rotor (24), from among the at least two contact-less temperature sensors (51), is supported by the support portion and is disposed at the stator portion (70) opposing the rotor (24).

Fig.1

( a )

( b )

# Fig.2

REQUIRED TEMPERATURE
(THE TEMPERATURE OF
THERMISTOR THERMALLY
INSULATED IN IDEAL
CONDITIONS)

TO

ESTIMATING THE
VALUE OF T0-T1
ON THE BASIS OF
THE VALUE T2-T1

T1

T2

THE FIRST SENSOR UNIT

THE SECOND SENSOR UNIT

$T0 = T1 + \zeta(T2-T1)$
$\zeta$ : EXPERIMENTAL VALUE

0   Q1   Q2   Q(HEAT OUTFLOW
VIA THE SUPPORT
FILM)

16

Fig.3

Fig.4

( a )

( b )

A-A SECTION

( c )

A-A SECTION

Fig.5

(a)

ROTOR — 24

500

700

STATOR

A

A

70

(b)

24

ROTOR

520

800 — 500

700

STATOR

70

(c)

500

520   51a   54   800   51b

70

STATOR

A-A SECTION

(d)

500

520   51a   600   54   51b

800

70

STATOR

A-A SECTION

Fig.6

Fig.7

**INTERNATIONAL SEARCH REPORT**

| International application No. |
| --- |
| PCT/JP2009/064393 |

A. CLASSIFICATION OF SUBJECT MATTER
*F04D19/04*(2006.01)i, *G01K3/14*(2006.01)i

According to International Patent Classification (IPC) or to both national classification and IPC

B. FIELDS SEARCHED

Minimum documentation searched (classification system followed by classification symbols)
F04D19/04, G01K3/14

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X Y | JP 10-266991 A (Seiko Instruments Inc.), 06 October 1998 (06.10.1998), paragraph [0077]; fig. 8 & US 6416290 B1 & EP 967394 A1 & WO 1998/032972 A1 | 1-3 2-7 |
| X Y | JP 11-132186 A (Shimadzu Corp.), 18 May 1999 (18.05.1999), entire text; all drawings (Family: none) | 1 2-7 |
| Y | JP 2004-116319 A (BOC Edwards Technologies, Ltd.), 15 April 2004 (15.04.2004), entire text; all drawings (Family: none) | 4-5 |

☒ Further documents are listed in the continuation of Box C.　　☐ See patent family annex.

| | |
| --- | --- |
| *　Special categories of cited documents: "A" document defining the general state of the art which is not considered to be of particular relevance "E" earlier application or patent but published on or after the international filing date "L" document which may throw doubts on priority claim(s) or which is cited to establish the publication date of another citation or other special reason (as specified) "O" document referring to an oral disclosure, use, exhibition or other means "P" document published prior to the international filing date but later than the priority date claimed | "T" later document published after the international filing date or priority date and not in conflict with the application but cited to understand the principle or theory underlying the invention "X" document of particular relevance; the claimed invention cannot be considered novel or cannot be considered to involve an inventive step when the document is taken alone "Y" document of particular relevance; the claimed invention cannot be considered to involve an inventive step when the document is combined with one or more other such documents, such combination being obvious to a person skilled in the art "&" document member of the same patent family |

| Date of the actual completion of the international search 02 November, 2009 (02.11.09) | Date of mailing of the international search report 17 November, 2009 (17.11.09) |
| --- | --- |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

| | International application No. |
|---|---|
| | PCT/JP2009/064393 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 64-19198 A (Hitachi, Ltd.),<br>23 January 1989 (23.01.1989),<br>entire text; all drawings<br>& US 4904155 A & EP 299458 A2 | 4-5 |
| Y | JP 11-37087 A (Osaka Vacuum Ltd.),<br>09 February 1999 (09.02.1999),<br>entire text; all drawings<br>(Family: none) | 6-7 |

Form PCT/ISA/210 (continuation of second sheet) (April 2007)

**INTERNATIONAL SEARCH REPORT**

| International application No. |
|---|
| PCT/JP2009/064393 |

| **Box No. II** | **Observations where certain claims were found unsearchable (Continuation of item 2 of first sheet)** |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| **Box No. III** | **Observations where unity of invention is lacking (Continuation of item 3 of first sheet)** |
|---|---|

This International Searching Authority found multiple inventions in this international application, as follows:

Document 1 or document 2 describes a vacuum pump in which the temperature of a rotor is estimated from output values of two noncontact temperature sensors, and thus the invention in claim 1 is not considered to be novel over the invention described in document 1 or document 2 and does not have a special technical feature.
As a result of the investigation of special technical features of claims dependent on claim 1, five inventions linked by respective special technical features are contained.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**EP 2 317 148 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H1137087 B